# EUROPEAN PATENT SPECIFICATION

(11) **EP 0 918 605 B1**
(45) Date of publication and mention of the grant of the patent: **24.09.2003**
(21) Application number: 96924462.3
(22) Date of filing: 12.07.1996
(51) Int. Cl.: B29B 7/24

(54) **INTERNAL MIXER RAM WEIGHT AND HOPPER APPARATUS AND METHOD FOR FEEDING MIXER**
INTERNER BESCHWERTER MISCHERKOLBEN UND ZUFUHRVORRICHTUNG UND VERFAHREN ZUM BEVORRATEN EINES MISCHERS
ENSEMBLE TREMIE ET PISTON-PLONGEUR LESTE POUR MELANGEUR INTERNE ET PROCEDE POUR CHARGER CE DERNIER

(43) Date of publication of application: 02.06.1999
(73) Proprietor: THE GOODYEAR TIRE & RUBBER COMPANY, Akron, Ohio 44316-0001 (US)
(72) Inventor: CAIN, William, Jackson, Akron, OH 44305 (US); SASSON, Peter, Gerald, Junior, Stow, OH 44224 (US)
(74) Representative: Leitz, Paul
(86) International application number: US9611616
(87) International publication number: WO98002288

(56) References cited:
- EP-A- 0 272 338
- DE-A- 2 051 142
- DE-B- 1 197 605

## Description

### Technical Field

This invention relates to high intensity mixing machines for elastomeric materials. A batch of ingredients including carbon black is fed into a hopper which has a ram weight connected to a piston rod for controlling movement of the materials into the mixer. The hopper is closed except when the ingredients are being loaded.

### Background Art

An internal mixer hopper may be open as shown in US-A-5,492,403 but is preferably closed with a carbon black chute and valve and a charging section having a charging door for feeding materials into the hopper. With a closed hopper the ram weight has been contained in a compartment at the upper end of the hopper to guide the ram weight. The upward movement of the ram weight in the compartment at the upper end of the hopper has produced high pressures which has increased the power required to raise the ram weight. Also an exhaust dust collector has been required at the top of the chamber to reduce the dust ejected from the hopper by the upward movement of the ram weight in the chamber.

DE-B- 1,197,605 discloses a mixer for rubber or the like with a mixing chamber equipped with propellers and a shaft extending upward, serving as a guide for a plunger that can be raised and lowered, the hopper-shaped upper portion of which is provided with a filling opening and additionally with a ventilation opening traveling upward at an angle, characterized in that in the upper stroke area of the plunger between this and the adjacent wall of the shaft or the hopper-shared upper portion, a gas passage is provided, the ventilation capacity of which increases gradually depending on the lifting of the plunger.

### Disclosure of Invention

The present invention is directed to a high intensity mixer and hopper construction and method of reciprocating a ram weight to feed and control the flow of ingredients into the mixer. The hopper is closed except during the feeding of carbon black and oils into a carbon black chute by opening a valve in the chute and feeding the elastomeric ingredients into the hopper by opening a charging door in a wall of the hopper. The hopper of this invention has a ram weight compartment for guiding movement of the ram weight and an opening in the compartment through which material and gasses may flow into and out of the hopper chamber during movement of the ram weight. A piston rod extending through the upper wall of the hopper is connected to the ram weight and to a piston cylinder apparatus mounted on top of the hopper. During upward movement of the ram weight in the ram weight compartment, the carbon black and elastomeric ingredients collect in the compartment at the upper wall of the hopper and above the ram weight. With the construction of this invention, these materials are transferred from the compartment to a storage space in the hopper through an opening in the compartment and the pressure is reduced so that dust is not ejected from the hopper and a dust collector at the upper wall is not required. Also the force necessary to lift the ram weight to the top of the compartment is minimized due to the reduction in pressure in the compartment.

In accordance with the invention there is provided an internal mixer and a method of mixing an elastomeric material as defined in the claims.

### Brief Description of the Drawings

Fig. 1 is an elevation partly in section of an internal mixer and hopper embodying the invention.
Fig. 2 is a side view partly in section taken along line 2-2 in Fig. 1.
Fig. 3 is a sectional view of the hopper and ram weight compartment taken along line 3-3 in Fig. 2 with part being broken away.
Figs 4-8 are views like Fig. 1 showing steps in the operation of the mixer and hopper assembly.

### Detailed Description of the Invention

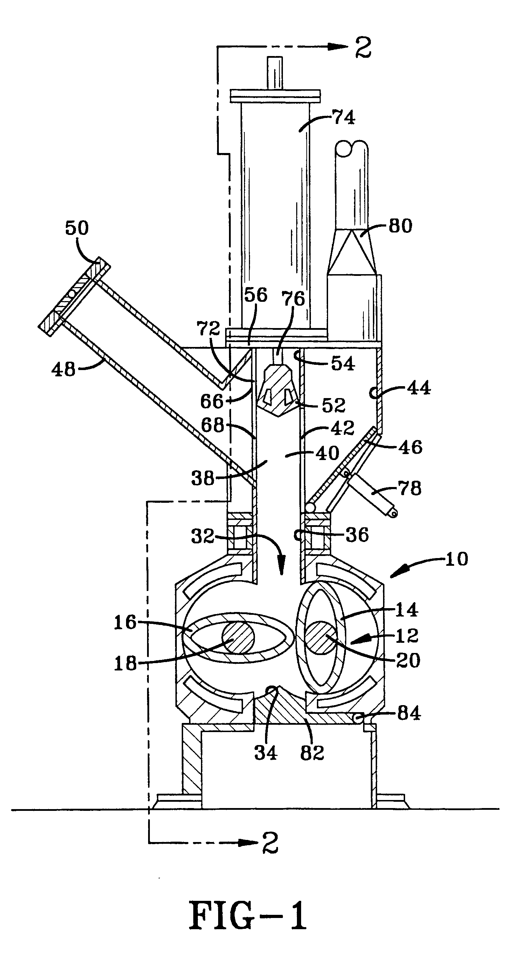

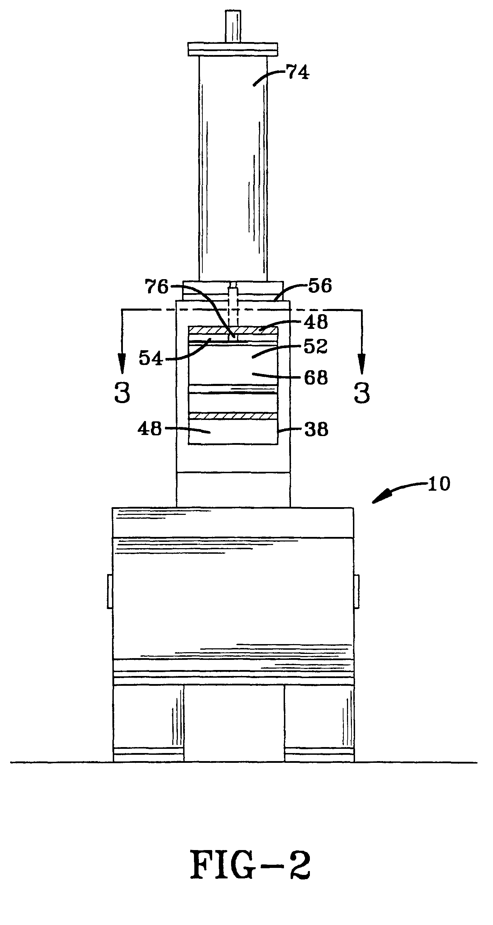

Referring to Figs. 1 and 2 an internal mixer 10 is shown having a mixing chamber 12 and a pair of rotors 14-16 rotatable about parallel axes on shafts 18-20. The mixing chamber 12 has an inlet opening hereinafter referred to as the inlet 32, and an outlet 34. The inlet 32 is in communication with a chute 36 attached to a hopper 38 for receiving ingredients to be mixed in the mixing chamber 12.

The hopper 38 has a storage space 40 above the chute 36 for receiving the ingredients to be mixed in the mixing chamber 12. These ingredients include elastomeric materials fed into the storage space 40 through a charging opening 42 from a charged hopper compartment 44. The charging opening 42 may be opened and closed by a charging door 46. Carbon black and oils may be fed into the storage space 40 by a carbon black chute 48 having a butterfly valve 50 for opening and closing the chute.

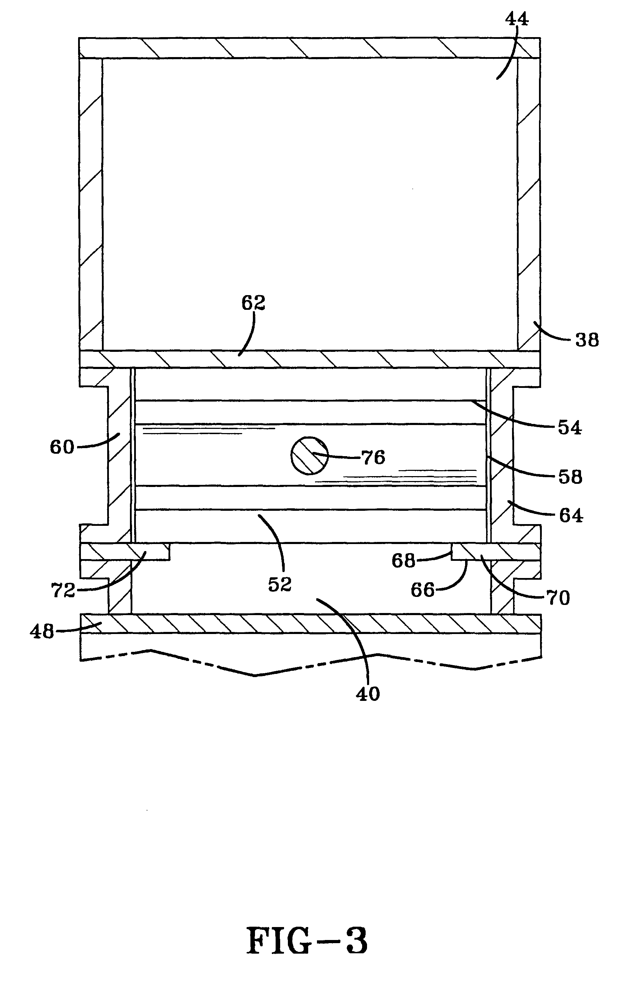

A ram weight 52 is vertically movable through the chute 36 and through a ram weight compartment 54 in the hopper 38 located above the chute 36 and under an upper wall 56 of the hopper. The ram weight 52 is generally rectangular in cross-section and is slidably movable in the ram weight compartment 54 which has a generally rectangular opening 58 for containing the ram weight as shown in Fig. 3. Three sides of the ram weight compartment 54 are provided by the sides 60, 62, and 64 of the hopper 38. A fourth side 66 of the ram weight compartment 54 has an opening 68 between spaced guide members such as flanges 70 and 72. The opening 68 is in communication with the storage space 40. of the hopper 38 whereby materials and gasses in the ram weight compartment 54 above the ram weight 52 may flow into the storage space 40. The flanges 70 and 72 extend from the upper wall 56 of the hopper to the chute 36.

Mounted above the upper wall of the hopper 56 is a piston cylinder 74 having a piston rod 76 extending through an opening in the upper wall and connected to the ram weight 52 for moving the ram weight vertically in the hopper. In this manner, the ram weight 52 controls the movement of materials from the storage space 40 in the hopper 38 into the mixing chamber 12 of the internal mixer 10.

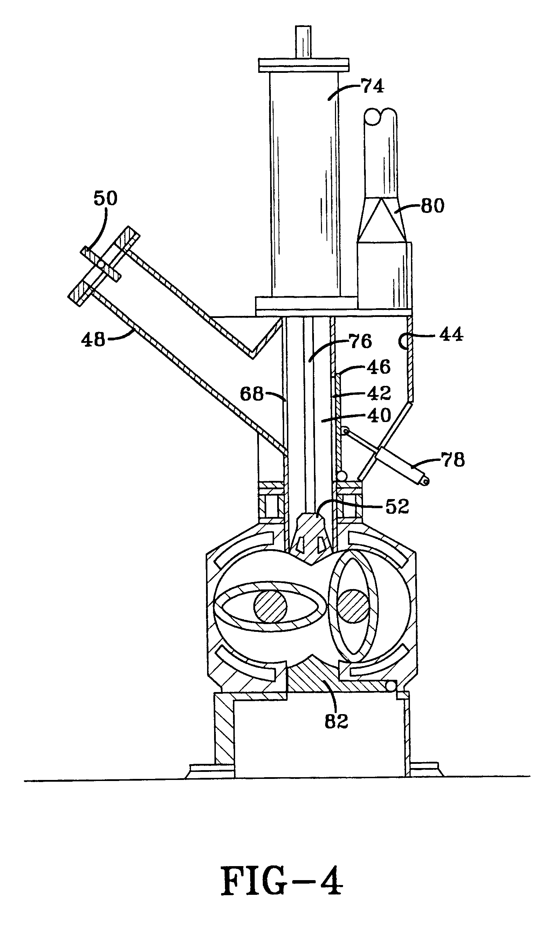

The charging door 46 may be hinged and move from an open position shown in Fig. 1 to a closed position shown in Fig. 4 by suitable means such as a pneumatic cylinder 78. Also a dust collector 80 may be mounted above and in communication with the charge hopper compartment 44 to control the escape of dust during the charging operation.

A drop door 82 is provided for opening and closing the internal mixer outlet 34 and may be rotated into and out of position in the outlet 34 on a shaft 84 turned by suitable power means.

In operation, when the ram weight 52 is raised in the ram weight compartment 54 in the position shown in Figs. 1, 2 and 3, the materials and gasses above the ram weight are moved by the movement of the ram weight from the space above the ram weight through the opening 68 into the storage space 40 in the hopper 38. In this way there is not a build up of pressure in the ram weight compartment 54 which would increase the force required by the piston cylinder 74 to raise the ram weight 52 and also cause leakage of the materials and gasses above the ram weight through the upper wall 56 of the hopper 38.

To illustrate the operation of the hopper 38 and internal mixer 10, reference is made to Figures 1 and 4-8. By referring to Fig. 1 the ram weight 52 is in the raised position, the charging door 46 is open and the carbon black valve 50 is closed. Also the drop door 82 of the internal mixer 10 is closed. In this condition the elastomeric material, such as rubber, is conveyed to the charge hopper compartment 44 and through the charging door 46 into the storage space 40 of the hopper 38. The charging door 46 is then closed. The carbon black valve 50 then opens to add carbon black after which it closes. As shown in Fig. 4, ram weight 52 moves down under pressure and is held down. Then the carbon black valve 50 is opened to add carbon black and closes depositing the carbon black over the ram weight 52.

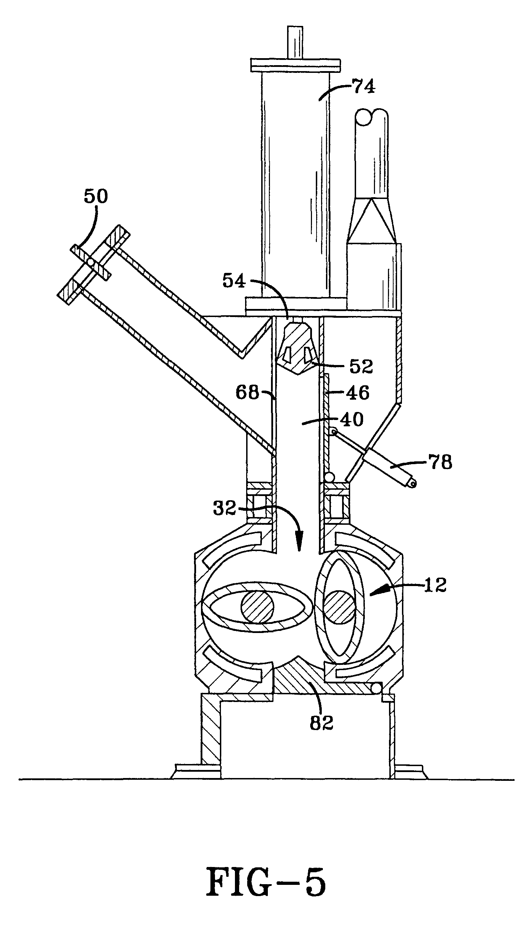

Referring to Fig. 5 the ram weight 52 is raised. The carbon black valve 50 is opened and oil is injected through the inlet 32 into the mixing chamber 12.

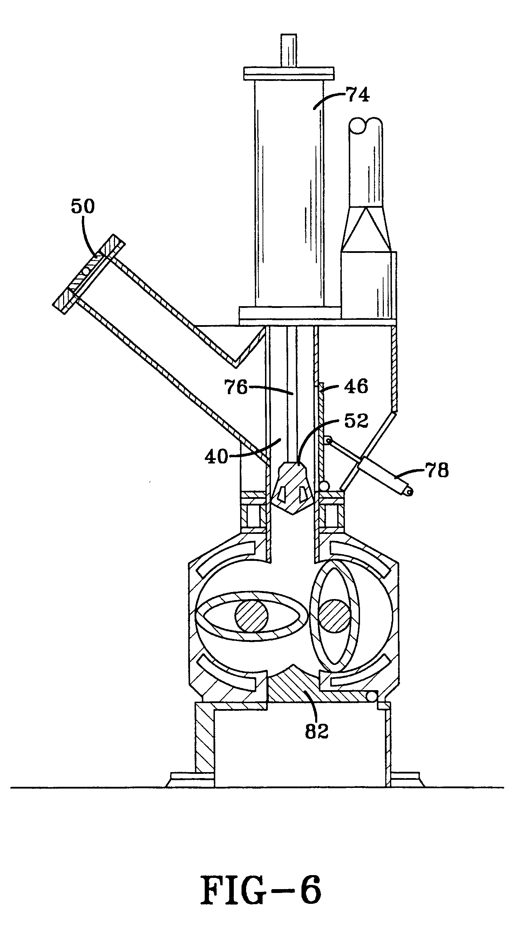

Referring to Fig. 6 the ram weight 52 is moved downward under pressure from the piston cylinder with the carbon black valve 50 closed and the charging door 46 closed providing a float condition.

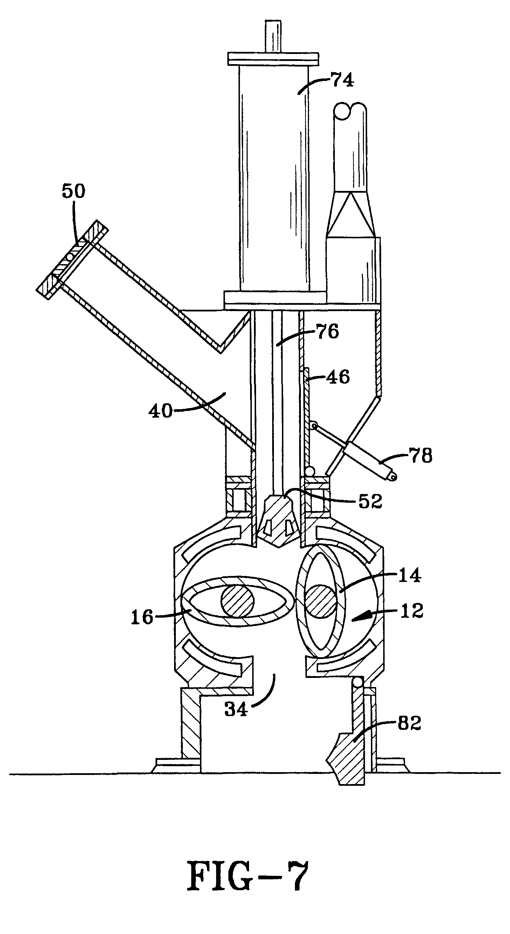

Referring to Fig. 7, the batch of mixed ingredients in the mixing chamber 12 is dropped by opening the drop door 82. In this condition the ram weight is held in position without exerting pressure and both the charging door 46 and carbon black valve 50 are closed. During these operations the rotors 14 and 16 may be rotated to mix the ingredients and eject the mixed batch from the mixing chamber.

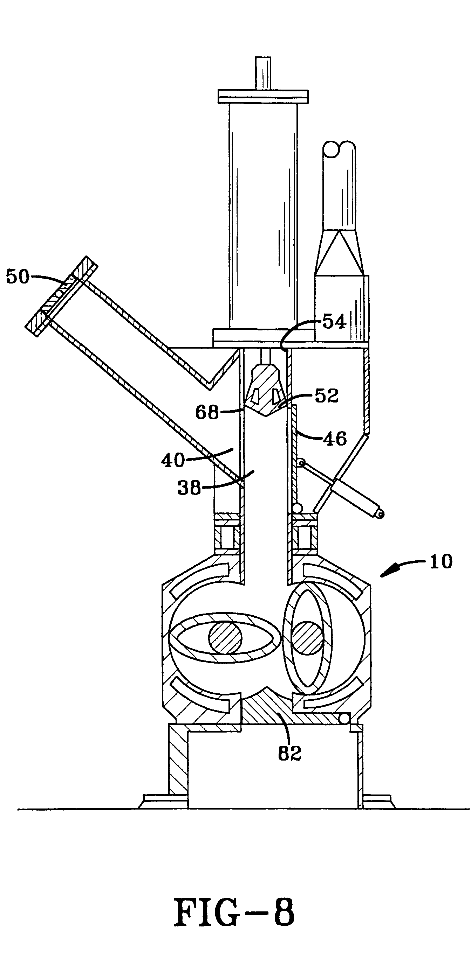

Referring to Fig. 8, the ram weight 52 is lifted to the upper position with the charging door 46 and carbon black valve 50 closed at the same time the drop door 82 is closed. During this upward movement, the carbon black and elastomeric materials above the ram weight 52 in the ram weight compartment 54 flow through the opening 68 into the storage space 40 of the hopper relieving the pressure above the ram weight. It has been found that this apparatus and method is very effective in preventing leakage of dust from the ram weight compartment 54 into the space surrounding the internal mixer and hopper 38.

## Claims

1. An internal mixer (10) of the type having a mixing chamber (12) with an inlet (32) in communication with a chute (36) attached to a feed hopper (38) with a ram weight (52) to control movement of materials from a storage space (40) in said feed hopper into said mixing chamber (12), and a ram weight compartment (54) for guiding movement of said ram weight, an opening (68) in communication with said storage space (40) whereby materials and gasses in said ram weight compartment may flow into said storage space, **characterized in** the ram weight compartment being closed, except during the feeding of material and ingredients to be mixed in the mixing chamber (12), by a valve in the chute, a charging door (46) in a wall of the hopper and the upper wall (56) of the hopper (38).

2. The internal mixer of claim 1 further **characterized by** said ram weight compartment (54) having spaced apart guide members (70,72) and said opening (68) is in the space between said guide members.

3. The internal mixer of claim 2 further **characterized by** the guide members (70,72) extending from the upper wall (56) of the hopper to the chute (36).

4. The internal mixer of claim 1 further **characterized by** said charging door (46) opening and closing a charging opening (42) in communication with a charge hopper compartment (44).

5. The internal mixer of claim 1 further **characterized by** said ram weight (52) being generally rectangular in cross-section.

6. The internal mixer of claim 1 further **characterized by** a piston-cylinder apparatus (74) mounted over said hopper (38) with a piston rod (76) extending through an opening in said upper wall of said feed hopper and connected to said ram weight (52) whereby movement of said ram weight is provided by movement of said piston rod in response to change in pressure in said piston cylinder apparatus.

7. A method of mixing an elastomeric material in an internal mixer (10) of the type having rotors (14,16) for rotation in a mixing chamber (12), a feed hopper (38) located above said internal mixer and in communication with said mixing chamber through an inlet (32) of said mixer and a ram weight (52) vertically movable in said hopper from an upper position in a ram weight compartment (54) of said feed hopper to a lower position adjacent said inlet (32) comprising
(a) raising said ram weight (52) to said upper position;
(b) opening a charging door (46) to charge said hopper with an elastomeric material;
(c) closing said charging door (46);
(d) opening a valve (50) in said hopper to add carbon black to said elastomeric material in said hopper;
(e) closing said valve (50);
(f) lowering said ram weight (52) to said lower position to feed said carbon black and elastomeric material into said mixing chamber (12);
(g) raising said ram weight (12);
(h) opening said valve (50), adding oil to said hopper (38) and then closing said valve;
(i) lowering said ram weight (52) to a float position;
(j) opening a drop door (82) to drop a mixed batch of carbon black, elastomeric materials and oils from said mixing chamber;
(k) closing said drop door (82) and raising said ram weight (52) with said valve (50) and said charging door (46) closed, **characterized by**:
(l) ejecting said carbon black and elastomeric materials plus mixing gases from said ram weight compartment (54) into a storage space (40) in said hopper (38) during raising of said ram weight (52) to reduce the pressure in said compartment resisting upward movement of said ram weight and to reduce the pressure causing leakage of said gases and materials from said ram weight compartment.

8. The method of claim 7 wherein said ram weight compartment (54) has an opening (68) in communication with said storage space (40) in said hopper (38) further **characterized by** ejecting said materials and said gasses from said compartment through said opening upon raising of said ram weight (52).

9. The method of claim 8 wherein said ram weight compartment (54) has spaced apart guide members with said opening (68) being disposed between said guide members (70,72) further **characterized by** raising said ram weight (52) with said guide members in sliding contact with said ram weight to eject said materials and said gasses from said compartment into said storage space through said opening.

## Patentansprüche

1. Innenmischer (10) von der Art, der eine Mischkammer (12) mit einem Einlaß (32) aufweist, der mit einem Schacht (36) in Verbindung steht, der an einem Einfülltrichter (38) angebracht ist, mit einem Stₑmpelgewicht (52) um eine Bewegung von Materialien aus einem Speicherraum (40) in dem Einfülltrichter in die Mischkammer (12) hinein zu steuern, und einer Stempelgewichtssektion (54) zum Führen einer Bewegung des Stempelgewichtes, einer Öffnung (68), die mit dem Speicherraum (40) in Verbindung steht, wodurch Materialien und Gase in der Stempelgewichtssektion in den Speicherraum hineinströmen können, **dadurch gekennzeichnet, daß** die Stempelgewichtssektion außer während des Einfüllens von zu mischendem Material und Inhaltsstoffen in die Mischkammer (12) durch eine Klappe in dem Schacht, eine Beschickungstür (46) in einer Wand des Trichters und die obere Wand (56) des Trichters (38) geschlossen ist.

2. Innenmischer nach Anspruch 1, ferner **dadurch gekennzeichnet, daß** die Stempelgewichtssektion (54) voneinander beabstandet angeordnete Führungselemente (70, 72) aufweist, und daß sich die Öffnung (68) in dem Raum zwischen den Führungselementen befindet.

3. Innenmischer nach Anspruch 2, ferner **dadurch gekennzeichnet, daß** sich die Führungselemente (70, 72) von der oberen Wand (56) des Trichters aus bis zum Schacht (36) erstrecken.

4. Innenmischer nach Anspruch 1, ferner **dadurch gekennzeichnet, daß** die Beschickungstür (46) eine mit einer Beschickungstrichtersektion (44) in Verbindung stehende Beschickungsöffnung (42) öffnet und schließt.

5. Innenmischer nach Anspruch 1, ferner **dadurch gekennzeichnet, daß** das Stempelgewicht (52) einen im allgemeinen rechteckigen Querschnitt aufweist.

6. Innenmischer nach Anspruch 1, femer **gekennzeichnet durch** eine Kolben-Zylinder-Vorrichtung (74), die über dem Trichter (38) montiert ist, wobei sich eine Kolbenstange (76) **durch** eine Öffnung in der oberen Wand des Einfülltrichters hindurch erstreckt und mit dem Stempelgewicht (52) verbunden ist, wodurch eine Bewegung des Stempelgewichtes **durch** eine Bewegung der Kolbenstange in Ansprechen auf eine Druckänderung in der Kolben-Zylinder-Vorrichtung bereitgestellt wird.

7. Verfahren zum Mischen von Elastomermaterial in einem Innenmischer (10) von der Art, umfassend Rotoren (14, 16) zur Drehung in einer Mischkammer (12), einen Einfülltrichter (38), der oberhalb des Innenmischers angeordnet ist und durch einen Einlaß (32) des Mischers in Verbindung mit der Mischkammer in Verbindung steht, und ein Stempelgewicht (52), das in dem Trichter aus einer oberen Stellung in einer Stempelgewichtssektion (54) des Einfülltrichters in eine untere Stellung neben dem Einlaß (32) vertikal bewegbar ist, umfassend, daß:
(a) das Stempelgewicht (52) in die obere Stellung angehoben wird;
(b) eine Beschickungstür (46) geöffnet wird, um den Trichter mit einem Elastomermaterial zu beschicken;
(c) die Beschickungstür (46) geschlossen wird;
(d) eine- Klappe (50) in dem Trichter geöffnet wird, um dem Elastomermaterial in dem Trichter Ruß hinzuzufügen;
(e) die Klappe (50) geschlossen wird;
(f) das Stempelgewicht (52) in die untere Stellung abgesenkt wird, um den Ruß und das Elastomermaterial in die Mischkammer (12) einzufüllen;
(g) das Stempelgewicht (12) angehoben wird;
(h) die Klappe (50) geöffnet, dem Trichter (38) Öl hinzugefügt und dann die Klappe geschlossen wird;
(i) das Stempelgewicht (52) in eine schwimmende Stellung abgesenkt wird;
(j) ein Klappsattel (82) geöffnet wird, um eine gemischte Charge aus Ruß, Elastomermaterialien und Ölen aus der Mischkammer fallenzulassen;
(k) der Klappsattel (82) geschlossen und das Stempelgewicht (52) angehoben wird, wobei die Klappe (50) und die Beschickungstür (46) geschlossen werden,
**dadurch gekennzeichnet, daß**:
(l) der Ruß und die Elastomermaterialien plus Mischgase während des Anhebens des Stempelgewichtes (52) aus der Stempelgewichtssektion (54) in einen Speicherraum (40) in dem Trichter (38) hinein ausgestoßen werden, um den Druck in der Sektion zu reduzieren, der einer Bewegung des Stempelgewichtes nach oben Widerstand entgegenbringt, und den Druck zu reduzieren, der eine Leckage der Gase und Materialien aus der Stempelgewichtssektion heraus bewirkt.

8. Verfahren nach Anspruch 7, wobei die Stempelgewichtssektion (54) eine Öffnung (68) aufweist, die mit dem Speicherraum (40) in dem Trichter (38) in Verbindung steht, ferner **dadurch gekennzeichnet, daß** die Materialien und die Gase beim Anheben des Stempelgewichtes (52) aus der Sektion heraus durch die Öffnung hindurch ausgestoßen werden.

9. Verfahren nach Anspruch 8, wobei die Stempelgewichtssektion (54) voneinander beabstandet angeordnete Führungselemente aufweist, wobei die Öffnung (68) zwischen den Führungselementen (70, 72) angeordnet ist, ferner **dadurch gekennzeichnet, daß** das Stempelgewicht (52) angehoben wird, wobei die Führungselemente in verschieblichem Kontakt mit dem Stempelgewicht stehen, um die Materialien und die Gase durch die Öffnung hindurch aus der Sektion heraus in den Speicherraum hinein auszustoßen.

## Revendications

1. Mélangeur interne (10) du type comportant une chambre de mélange (12) comprenant une entrée (32) en communication avec une glissière (36) fixée à une trémie d'entrée (38) comprenant un contrepoids (52) pour commander le mouvement des matières depuis un espace de stockage (40) dans ladite trémie d'entrée jusque dans ladite chambre de mélange (12), et un compartiment (54) pour le contrepoids pour guider le mouvement dudit contrepoids, une ouverture (68) en communication avec ledit espace de stockage (40) par laquelle les matières et les gaz dans ledit compartiment dudit contrepoids peuvent pénétrer en s'écoulant dans ledit espace de stockage, **caractérisé en ce que** ledit compartiment du contrepoids est fermé, sauf pendant l'alimentation de la matière et des ingrédients à mélanger dans la chambre de mélange (12), à l'aide d'une soupape dans la glissière, de la porte de chargement (46) dans la paroi de la trémie d'entrée et de la paroi supérieure 56 de la trémie d'entrée (38).

2. Mélangeur interne selon la revendication 1, **caractérisé en outre par le fait que** ledit compartiment du contrepoids (54) possède des éléments de guidage (70, 72) espacés les uns des autres et ladite ouverture (68) est prévue dans l'espace ménagé entre lesdits éléments de guidage.

3. Mélangeur interne selon la revendication 2, **caractérisé en outre par le fait que** les éléments de guidage (70, 72) s'étendent depuis la paroi supérieure (56) de la trémie d'entrée jusqu'à la glissière (36).

4. Mélangeur interne selon la revendication 1, **caractérisé en outre par le fait que** ladite porte (46) ouvre et ferme une ouverture de chargement (42) en communication avec un compartiment (44) de la trémie de chargement.

5. Mélangeur interne selon la revendication 1, **caractérisé en outre par le fait que** ledit contrepoids (52) possède généralement une section transversale rectangulaire.

6. Mélangeur interne selon la revendication 1, **caractérisé en outre par** un appareil du type à piston et cylindre (74) monté par-dessus ladite trémie d'entrée (38) comprenant une tige de piston (76) s'étendant à travers une ouverture pratiquée dans ladite paroi supérieure de ladite trémie d'entrée et reliée audit contrepoids (52), par lequel le mouvement dudit contrepoids est fourni par le mouvement de ladite tige de piston en réponse à un changement de pression dans ledit appareil du type à piston et cylindre.

7. Procédé de mélange d'une matière élastomère dans un mélangeur interne (10) du type possédant des rotors (14, 16) destinés à effectuer des rotations dans une chambre de mélange (12), une trémie d'entrée (38) disposée par-dessus ledit mélangeur interne et en communication avec ladite chambre de mélange via une entrée (32) dudit mélangeur et un contrepoids (52) mobile en direction verticale dans ladite trémie d'entrée depuis une position supérieure dans un compartiment de contrepoids (54) de ladite trémie d'entrée jusqu'à une position inférieure en position adjacente à ladite entrée (32), comprenant le fait de
(a) soulever ledit contrepoids (52) jusqu'à ladite position supérieure;
(b) ouvrir une porte de chargement (46) pour charger une matière élastomère dans ladite trémie d'entrée;
(c) fermer ladite porte de chargement (46);
(d) ouvrir une soupape (50) dans ladite trémie d'entrée pour ajouter du noir de carbone à ladite matière élastomère dans ladite trémie d'entrée;
(e) fermer ladite soupape (50);
(f) abaisser ledit contrepoids (52) jusqu'à ladite position inférieure pour alimenter ledit noir de carbone et ladite matière élastomère dans ladite chambre de mélange (12);
(g) soulever ledit contrepoids (12);
(h) ouvrir ladite soupape (50), ajouter de l'huile dans ladite trémie d'entrée (38) et fermer ensuite ladite soupape;
(i) abaisser ledit contrepoids (52) dans une position de flottement;
(j) ouvrir une porte d'évacuation (82) pour évacuer un lot mélangé de noir de carbone, de matières élastomères et d'huile depuis ladite chambre de mélange;
(k) fermer ladite porte d'évacuation (82) et soulever ledit contrepoids (52), ladite soupape (50) et ladite porte de chargement étant fermée, **caractérisé par** le fait de :
(l) éjecter ledit noir de carbone et lesdites matières élastomères plus les gaz de mélange dudit compartiment de contrepoids (54) dans un espace de stockage (40) dans ladite trémie d'entrée (38) au cours du soulèvement dudit contrepoids (52) afin de réduire la pression régnant dans ledit compartiment qui exerce une résistance sur le mouvement ascendant dudit contrepoids et afin de réduire la pression, donnant lieu à la fuite desdits gaz et desdites matières hors dudit compartiment de contrepoids.

8. Procédé selon la revendication 7, dans lequel ledit compartiment de contrepoids (54) possède une ouverture (68) en communication avec ledit espace de stockage (40) dans ladite trémie (38), **caractérisé en outre par** le fait d'éjecter lesdites matières et lesdits gaz dudit compartiment à travers ladite ouverture au cours du soulèvement dudit contrepoids (52).

9. Procédé selon la revendication 8, dans lequel ledit compartiment de contrepoids (54) possède des éléments de guidage séparés les uns des autres, ladite ouverture (68) étant disposée entre lesdits éléments de guidage (70, 72), **caractérisé en outre par** le fait de soulever ledit contrepoids (52) tandis que lesdits éléments de guidage entrent en contact par glissement avec ledit contrepoids afin d'éjecter ladite matière et lesdits gaz dudit compartiment dans ledit espace de stockage à travers ladite ouverture.
